# EUROPEAN PATENT SPECIFICATION

(11) **EP 4 606 204 B1**
(45) Date of publication and mention of the grant of the patent: **09.12.2026**
(21) Application number: 25160342.9
(22) Date of filing: 26.02.2025
(51) Int. Cl.: A01D 46/26

(54) **WOBBLE BOX FOR A SHAKER OF AN AGRICULTURAL HARVESTER**
TAUMELGEHÄUSE FÜR EINEN SCHÜTTLER EINER LANDWIRTSCHAFTLICHEN ERNTEMASCHINE
BOÎTE OSCILLANTE POUR UN AGITATEUR D'UNE MOISSONNEUSE AGRICOLE

(30) Priority: 26.02.2024 BR 102024003772
(43) Date of publication of application: 27.08.2025
(73) Proprietor: CNH Industrial France S.A.S., 91150 Morigny-Champigny (FR)
(72) Inventor: Paquereau, Cyrille, 91150 Morigny-Champigny (FR); Beleteau, David, 91150 Morigny-Champigny (FR)
(74) Representative: CNH Industrial IP Department

(56) References cited:
- US-A- 3 344 591
- US-A- 5 113 644
- US-A1- 2021 337 732
- US-A1- 20230 232 742

## Description

### FIELD OF THE INVENTION

The present disclosure relates generally to agricultural vehicles and, more particularly, to a wobble box for a shaker of an agricultural harvester, such as for an agricultural harvester that harvests crop by shaking plants.

### BACKGROUND OF THE INVENTION

A harvester is an agricultural machine that is used to harvest and process crops. For instance, an agricultural harvester for harvesting crops such as olives, oranges, lemons, tangerines, nuts, coffee beans, and/or the like may shake the plant as it moves over the plant, such as a bush, shrub, tree, and/or the like. For example, such a harvester may have a pair of shaker brushes or "shakers" between which a plant may be received as the harvester moves along a row of plants, where each shaker has a plurality of flexible rods extending outwardly from a central column. The central columns rotate to hit the rods against the plant to vibrate or shake the crop loose from the plant. However, existing mechanisms for rotating such central columns require a large amount of installation space, are complex, and/or require complex control.

Accordingly, a wobble box for a shaker of an agricultural harvester, a related shaking mechanism having such a wobble box, and a related agricultural harvester having such a wobble box that is simple and reduces installation space would be welcomed in the technology.

### BRIEF DESCRIPTION OF THE INVENTION

Aspects and advantages of the invention will be set forth in part in the following description, or may be obvious from the description, or may be learned through practice of the invention.

In one aspect, the present subject matter is directed to an agricultural harvester. The agricultural harvester may include a frame, a shaker supported on the frame, and a wobble box. The shaker may include a central column rotatable about a column axis relative to the frame, and a plurality of flexible rods extending outwardly from the central column. The wobble box may include a housing, an input shaft rotatable about an input axis relative to the housing, and a wobble shaft rotatably coupled to the input shaft. The wobble shaft may be rotatable relative to the housing about an intermediate axis, where the intermediate axis may be at an angle relative to the input shaft. The wobble shaft may have a central body portion, where the central body portion may be asymmetric about the intermediate axis. Moreover, the wobble box may include a pivot sleeve configured to rotate about a sleeve axis, with the sleeve axis being at an angle relative to the intermediate axis. The pivot sleeve may define an opening for receiving the central body portion of the wobble shaft. The pivot sleeve may oscillate between rotating in a first direction and a second direction about the sleeve axis with rotation of the wobble shaft in a first direction about the intermediate axis. Additionally, the wobble box may include an output shaft coupled to the pivot sleeve and rotatably fixedly coupled to the central column. The output shaft may be configured to rotate about an output axis, with the output axis being at an angle relative to the sleeve axis and coincident with the column axis. The output shaft rotates in a first direction about the output axis when the pivot sleeve rotates in the first direction about the sleeve axis, the output shaft rotating in a second direction about the output axis when the pivot sleeve rotates in the second direction about the sleeve axis.

**In** another aspect, the present subject matter is directed to a shaking mechanism for an agricultural harvester. The shaking mechanism may include a shaker having a central column rotatable about a column axis, and a plurality of flexible rods extending outwardly from the central column. The shaking mechanism may further include a wobble box. The wobble box may have a housing, an input shaft rotatable about an input axis relative to the housing, and a wobble shaft rotatably coupled to the input shaft. The wobble shaft may be rotatable relative to the housing about an intermediate axis, with the intermediate axis being at an angle relative to the input axis. The wobble shaft may have a central body portion, where the central body portion may be asymmetric about the intermediate axis. Additionally, the wobble box may have a pivot sleeve configured to rotate about a sleeve axis, the sleeve axis being at an angle relative to the intermediate axis. The pivot sleeve may define an opening for receiving the central body portion of the wobble shaft. The pivot sleeve may oscillate between rotating in a first direction and a second direction about the sleeve axis with rotation of the wobble shaft in a first direction about the intermediate axis. Additionally, the wobble box may include an output shaft coupled to the pivot sleeve and rotatably fixedly coupled to the central column. The output shaft may be configured to rotate about an output axis, the output axis being at an angle relative to the sleeve axis and coincident with the column axis. The output shaft may rotate in a first direction about the output axis when the pivot sleeve rotates in the first direction about the sleeve axis, and the output shaft may rotate in a second direction about the output axis when the pivot sleeve rotates in the second direction about the sleeve axis.

In an additional aspect, the present subject matter is directed to a wobble box for shakers of agricultural harvesters. The wobble box may have a housing, an input shaft rotatable about an input axis relative to the housing, and a wobble shaft rotatably coupled to the input shaft. The wobble shaft may be rotatable relative to the housing about an intermediate axis, with the intermediate axis being at an angle relative to the input axis. The wobble shaft may have a central body portion, where the central body portion may be asymmetric about the intermediate axis. Moreover, the wobble box may include a pivot sleeve configured to rotate about a sleeve axis, with the sleeve axis being at an angle relative to the intermediate axis. The pivot sleeve may define an opening for receiving the central body portion of the wobble shaft. The pivot sleeve may oscillate between rotating in a first direction and a second direction about the sleeve axis with rotation of the wobble shaft in a first direction about the intermediate axis. Additionally, the wobble box may include an output shaft coupled to the pivot sleeve. The output shaft may be configured to be rotatably fixedly coupled to a shaker of an agricultural harvester. The output shaft may be configured to rotate about an output axis, where the output axis may be at an angle relative to the sleeve axis. The output shaft may rotate in a first direction about the output axis when the pivot sleeve rotates in the first direction about the sleeve axis, and the output shaft may rotate in a second direction about the output axis when the pivot sleeve rotates in the second direction about the sleeve axis.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures, in which:
FIGS. 1A and 1B illustrate different views of one embodiment of an agricultural harvester in accordance with aspects of the present subject matter;
FIG. 2 illustrates a perspective view of a wobble box for a shaker of the agricultural harvester illustrated in FIGS. 1A and 1B in accordance with aspects of the present subject matter;
FIG. 3 illustrates a section view of the wobble box illustrated in FIG. 2 taken with respect to section line 3-3' in accordance with aspects of the present subject matter;
FIG. 4 illustrates another section view of the wobble box illustrated in FIG. 2 taken with respect to section line 4-4' in accordance with aspects of the present subject matter; and
FIG. 5 illustrates a top-down view of one embodiment of a shaker of the agricultural harvester illustrated in FIGS. 1A and 1B, and having the wobble box illustrated in FIGS. 2-4 in accordance with aspects of the present subject matter.

Repeat use of reference characters in the present specification and drawings is intended to represent the same or analogous features or elements of the present technology.

### DETAILED DESCRIPTION OF THE INVENTION

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope of the invention.

In this document, relational terms, such as first and second, top and bottom, and the like, are used solely to distinguish one entity or action from another entity or action, without necessarily requiring or implying any actual such relationship or order between such entities or actions. The terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus. An element preceded by "comprises... a" does not, without more constraints, preclude the existence of additional identical elements in the process, method, article, or apparatus that comprises the element.

As used herein, the terms "first," "second," and "third" may be used interchangeably to distinguish one component from another and are not intended to signify a location or importance of the individual components. The terms "coupled," "fixed," "attached to," and the like refer to both direct coupling, fixing, or attaching, as well as indirect coupling, fixing, or attaching through one or more intermediate components or features, unless otherwise specified herein. The terms "upstream" and "downstream" refer to the relative direction with respect to a harvested material within a fluid circuit. For example, "upstream" refers to the direction from which a harvested material flows, and "downstream" refers to the direction to which the harvested material moves. The term "selectively" refers to a component's ability to operate in various states (e.g., an ON state and an OFF state) based on manual and/or automatic control of the component.

Furthermore, any arrangement of components to achieve the same functionality is effectively "associated" such that the functionality is achieved. Hence, any two components herein combined to achieve a particular functionality can be seen as "associated with" each other such that the desired functionality is achieved, irrespective of architectures or intermedial components. Likewise, any two components so associated can also be viewed as being "operably connected" or "operably coupled" to each other to achieve the desired functionality, and any two components capable of being so associated can also be viewed as being "operably couplable" to each other to achieve the desired functionality. Some examples of operably couplable include, but are not limited to, physically mateable, physically interacting components, wirelessly interactable, wirelessly interacting components, logically interacting, and/or logically interactable components.

The singular forms "a," "an," and "the" include plural references unless the context clearly dictates otherwise.

Approximating language, as used herein throughout the specification and claims, is applied to modify any quantitative representation that could permissibly vary without resulting in a change in the basic function to which it is related. Accordingly, a value modified by a term or terms, such as "about," "approximately," "generally," and "substantially," is not to be limited to the precise value specified. In at least some instances, the approximating language may correspond to the precision of an instrument for measuring the value, or the precision of the methods or apparatus for constructing or manufacturing the components and/or systems. For example, the approximating language may refer to being within a ten percent margin.

Moreover, the technology of the present application will be described in relation to exemplary embodiments. The word "exemplary" is used herein to mean "serving as an example, instance, or illustration." Any embodiment described herein as "exemplary" is not necessarily to be construed as preferred or advantageous over other embodiments. Additionally, unless specifically identified otherwise, all embodiments described herein will be considered exemplary.

As used herein, the term "and/or," when used in a list of two or more items, means that any one of the listed items can be employed by itself, or any combination of two or more of the listed items can be employed. For example, if a composition or assembly is described as containing components A, B, and/or C, the composition or assembly can contain A alone; B alone; C alone; A and B in combination; A and C in combination; B and C in combination; or A, B, and C in combination.

In general, the present subject matter is directed to a wobble box for an agricultural harvester. Specifically, in several embodiments, the agricultural harvester has a shaking mechanism for releasing crop (e.g., olives, oranges, lemons, tangerines, nuts, coffee beans, and/or the like) from a plant (e.g., bush, shrub, tree, and/or the like) as the harvester moves over the plant. The shaking mechanism may include one or more shakers having a plurality of flexible rods extending outwardly from a central column. In accordance with aspects of the present subject matter, the central column is oscillated back and forth as it rotates by a wobble box such that the rods brush back and forth across the plant to vibrate or shake the crop loose from the plant. The wobble box for each shaker is particularly compact in a widthwise direction, as a rotational axis of an input shaft for driving the wobble box is oriented in substantially the same direction as a rotational axis of an output shaft rotatably coupled to the central column. Moreover, such wobble box is simple and reliable, as the input shaft is driven in a single direction while allowing for the output shaft to oscillate back and forth. Additionally, a housing of the wobble box rotates relative to the input and output shafts, where plants may be received between meshing external toothing on the housing of the wobble box and external toothing on a housing of a wobble box of another adjacent shaker, such that the plants are advanced along the direction of travel according to the ground speed of the agricultural harvester by rotation of the external toothing. As such, the external toothing of the wobble box housing may also be used to improve the amount of time that the plants are shaken by the shaking mechanism, which improves the effectiveness of the shaking mechanism, as more crop may be shaken loose from plants while between the shakers.

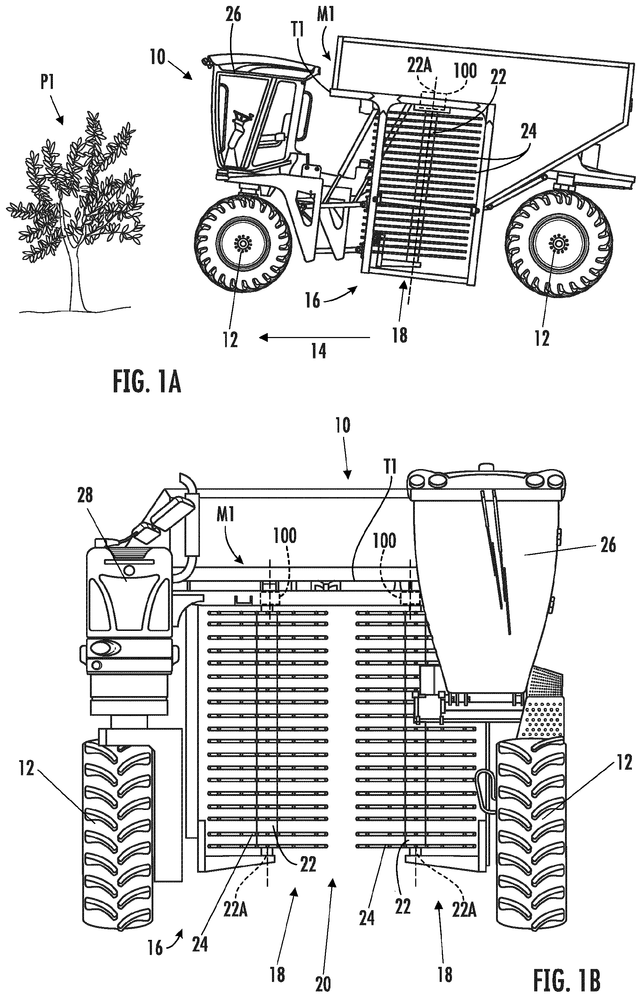

Referring now to the drawings, FIGS. 1A and 1B illustrate different views of one embodiment of an agricultural harvester 10 in accordance with aspects of the present subject matter. More particularly, FIG. 1A illustrates a side view of the agricultural harvester 10 and FIG. 1B illustrates a front view of the agricultural harvester 10.

In general, the agricultural harvester 10 may move across a field on wheels 12 in a forward direction of travel (e.g., as indicated by arrow 14) to harvest crop (e.g., olives, oranges, lemons, tangerines, nuts, coffee beans, and/or the like) from standing plants P1 (e.g., bushes, shrubs, trees, and/or the like) such that the standing plants P1 may grow further crops in subsequent growing seasons. More particularly, the agricultural harvester 10 has a main body or frame M1 that supports a shaking mechanism 16 that vibrates or shakes the plants P1 as the agricultural harvester 10 moves past the plants P1. The shaking mechanism 16 may include one or more shakers 18 positioned within a space or tunnel T1 defined between the left wheels 12 and the right wheels 12. For instance, in the illustrated embodiment, the shaking mechanism 16 includes at least one pair of shakers 18, between which a passage 20 (FIG. 1B) is formed. The agricultural harvester 10 is steered along a row of plants such that plants P1 are passed through the passage 20 between the shakers 18. Each of the shakers 18 includes a central column 22 and a plurality of flexible rods 24 extending radially outwardly from such central column 22. The central column 22 is drivable about a column rotational axis 22A such that the rods 24 may hit the plants P1 within the passage 20 to vibrate and/or shake crop off of the plants P1. Once the crop falls off of the plants P1 within the passage 20, the crop may be directed by conveying mechanisms within the agricultural harvester 10 into an on-board crop tank and/or out of the agricultural harvester 10, such as into a crop cart towed or driven alongside the agricultural harvester 10.

It should be appreciated that the agricultural harvester 10 may be self-propelled or may be an agricultural implement pulled by a working vehicle, such as a tractor. In cases where the agricultural harvester 10 is self-propelled, as illustrated, the harvesting machine also comprises a cab 26 with operator controls that allow an operator to adjust the harvesting parameters of the agricultural harvester 10. Moreover, the agricultural harvester 10 may include a motor 28 (FIG. 1B) that provides power to drive the mechanical, electrical, and hydraulic systems of the agricultural harvester 10.

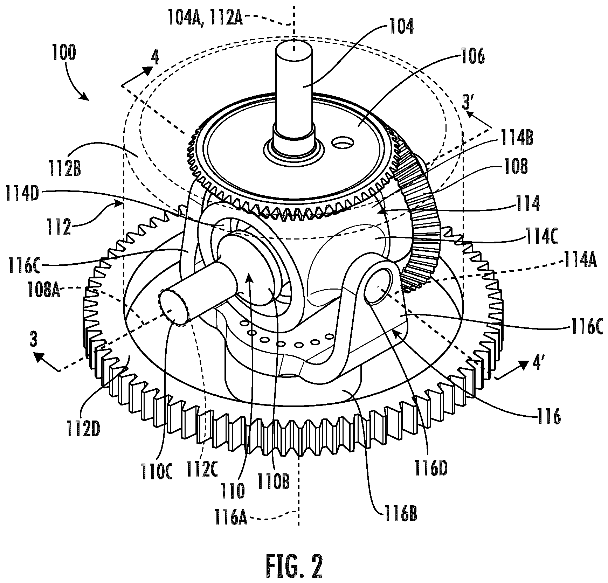

As will be described in greater detail with reference to FIGS. 2-5, the shaking mechanism 16 includes a wobble box 100 for driving the central column 22 to oscillate while rotating about the column rotational axis 22A. Such oscillation during rotation allows branches of the plants P1 to shake instead of just bending, which is more effective for removing crop from the plants P1. In some instances, the shaking mechanism 16 includes a wobble box 100 for each shaker 18.

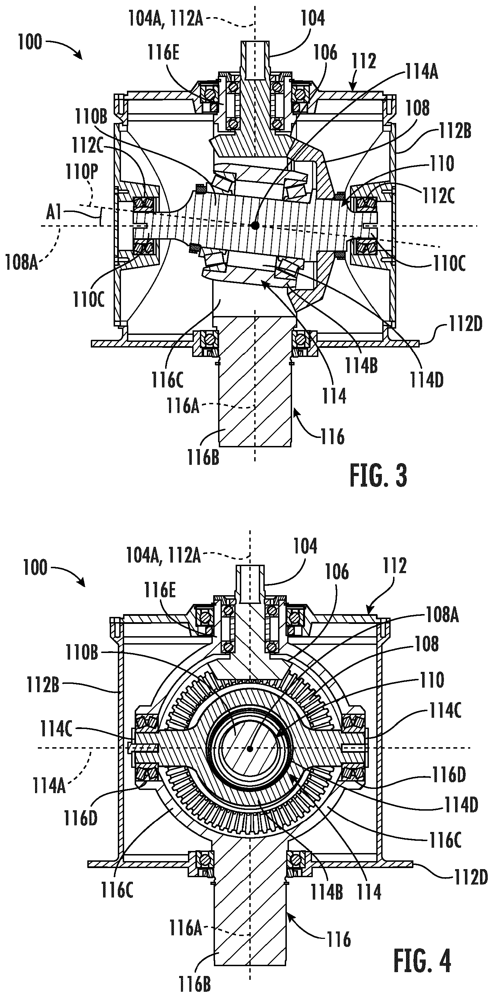

For instance, referring now to FIGS. 2-4, various views of an example wobble box, such as the wobble box 100, are shown. More particularly, FIG. 2 illustrates a perspective view of the wobble box 100 of one of the shakers 18 illustrated in FIGS. 1A and 1B. Moreover, FIG. 3 illustrates a section view of the wobble box 100 taken with respect to section line 3-3' in FIG. 2. Similarly, FIG. 4 illustrates another section view of the wobble box 100 taken with respect to section line 4-4' in FIG. 2.

The wobble box 100 has an input shaft 104, a first gear 106, a second gear 108, a wobble shaft 110, a wobble box housing 112, a pivot sleeve 114, and an output shaft 116. The input shaft 104 is rotatable about an input axis 104A. As particularly shown in FIGS. 3 and 4, the input shaft 104 may be supported for rotation about the input axis 104A by one or more bearings and may further be supported against translational movement along the input axis 104A by one or more of the bearings. In general, the input shaft 104 is indirectly coupled through the other parts of the wobble box 100 to the output shaft 116 such that, as the input shaft 104 is driven about the input axis 104A, the output shaft 116 may oscillate the central column 22 (FIGS. 1A and 1B) about the column rotational axis 22A (FIGS. 1A and 1B) while still effectively rotating the central column 22 about the column rotational axis 22A in a given direction. The input shaft 104 may be driven hydraulically (e.g., by operation of the motor 28) and/or in any other suitable manner.

Referring still to FIGS. 2-4, the input shaft 104 is rotationally fixedly coupled to the first gear 106 such that rotation of the input shaft 104 causes the same rotation of the first gear 106 about the input axis 104A. In some instances, the input shaft 104 and the first gear 106 may alternatively be formed as a single, unitary part. The first gear 106, in turn, is rotationally coupled to the second gear 108. For instance, teeth of the first gear 106 are configured to mesh with teeth of the second gear 108, such that rotation of the first gear 106 about the input axis 104A causes rotation of the second gear 108 about an intermediate axis 108A (where the section line 3-3' in FIG. 2 extends along the intermediate axis 108A). The first and second gears 106, 108 are oriented at an angle relative to each other, with the input axis 104A being at an angle relative to the intermediate axis 108A. For instance, in some embodiments, the input axis 104A may be substantially perpendicular to the intermediate axis 108A (e.g., in a vertical plane). In some instances, the first and second gears 106, 108 may be configured such that the first gear 106 may rotate at a different speed than the second gear 108. For instance, the first gear 106 may rotate at a higher rotational speed than the second gear 108. However, it should be appreciated that any suitable rotational speed relationship between the first and second gears 106, 108 may instead be used. It should additionally be appreciated that the first and second gears 106, 108 may be configured as any suitable type of gears.

The second gear 108 may be rotationally fixedly coupled to the wobble shaft 110 such that the wobble shaft 110 rotates together with the second gear 108 about the intermediate axis 108A. Generally, the wobble shaft 110 is rotationally supported by the wobble box housing 112. For instance, the wobble shaft 110 may have a central body portion 110B with a lobe 110C (FIGS. 2 and 3) extending from either end of the central body portion 110B along the intermediate axis 108A. The wobble box housing 112 includes a main body portion 112B that defines a volume within which the first gear 106, the second gear 108, the wobble shaft 110, the pivot sleeve 114, and/or the output shaft 116 is at least partially received. Recesses or openings 112C (FIGS. 2 and 3) are defined in a sidewall of the main body portion 112B of the wobble box housing 112, with each of the openings 112C being configured to receive a respective one of the lobes 110C of the wobble shaft 110 for supporting the wobble shaft 110 for rotation about the intermediate axis 108A. In some instances, as particularly shown in FIG. 3, bearings may be provided to rotationally support the wobble shaft 110 relative to the wobble box housing 112. For instance, the openings 112C in the sidewall of the wobble box housing 112 may be configured to receive bearings, which, in turn receive the lobes 110C of the wobble shaft 110. In one instance, bearings may additionally be configured to support the wobble shaft 110 against axial movement along the intermediate axis 108A.

Referring back to FIGS. 2-4, it should be appreciated that due to the connection between the wobble shaft 110 and the wobble box housing 112, the wobble box housing 112 is rotated about a housing axis 112A as the second gear 108 and wobble shaft 110 rotate about the intermediate axis 108A. The wobble box housing 112, the second gear 108, and the wobble shaft 110 all rotate together about the housing axis 112A. The housing axis 112A of the wobble box housing 112 is substantially parallel to the input axis 104A (e.g., in a vertical plane). In some instances, the housing axis 112A is coincident with the input axis 104A. In one instance, such as the illustrated embodiment, the input shaft 104 and the wobble box housing 112 rotate in opposite directions. Moreover, in some instances, the wobble box housing 112 rotates about the housing axis 112A by a lower rotational speed than the input shaft 104 about the input axis 104A. However, it should be appreciated that any suitable rotational speed relationship between the wobble box housing 112 and the input shaft 104 may instead be selected (e.g., by using different sized gear pairings of the gears 106, 108).

Furthermore, the wobble box housing 112 may include an external toothing 112D, such as at a lower vertical end of the wobble box housing 112. In some instances, the external toothing 112D extends in a plane orthogonal to the housing axis 112A. The external toothing 112D may be used to synchronize rotation of the wobble box housing 112 with other components of the agricultural harvester 10, such as with other wobble boxes 100 and/or the like. Additionally, as plants P1 pass between adjacent shakers 18, the plants P1 are also passed between the meshing external toothing 112D of the adjacent shakers 18, such that the plants P1 are passed between the adjacent shakers 18 and advanced by the meshing external toothing 112D along the direction of travel 14 at a speed corresponding to the ground speed of the agricultural harvester 10. For example, in some embodiments, a linear translation speed of the external toothing 112D, calculated as a product of the radius of the external toothing 112D with the rotational speed (in radians) of the wobble box housing 112 about the axis 112A, is substantially equal to the commanded ground speed of the agricultural harvester 10. As such, the external toothing 112D may also be used to hold the plants P1 in better position for being shaken as the plants P1 pass between adjacent shakers 18, to maximize the amount of time that the plants P1 can be shaken by the shakers 18 according to the ground speed of the agricultural harvester 10. Thus, the external toothing 112D may both synchronize the shaking mechanism 16 and maximize contact time between the plants P1 and the shaking mechanism 16.

The central body portion 110B of the wobble shaft 110 is received within the pivot sleeve 114. More particularly, the pivot sleeve 114 is configured to rotate about a sleeve axis 114A (where the section line 4-4' in FIG. 2 extends along the sleeve axis 114A). The sleeve axis 114A of the pivot sleeve 114 is at an angle relative to the intermediate axis 108A of the second gear 108 and the wobble shaft 110 and the input axis 104A of the input shaft 104. For instance, the sleeve axis 114A of the pivot sleeve 114 may be transverse or orthogonal to the intermediate axis 108A of the second gear 108 and the wobble shaft 110 (e.g., in a horizontal plane) and transverse or orthogonal to the input axis 104A of the input shaft 104 (e.g., in a vertical plane). The pivot sleeve 114 has a main body portion 114B and a lobe 114C (FIGS. 2 and 4) extending outwardly from each side of the main body portion 114B along the sleeve axis 114A. The main body portion 114B of the pivot sleeve 114 defines an opening 114D extending therethrough, where an axis of the opening 114D intersects and extends transverse or orthogonal to the sleeve axis 114A. The wobble shaft 110 is insertable through the opening 114D such that the central body portion 110B of the wobble shaft 110 is received within the opening 114D and the lobes 110C of the wobble shaft 110 are couplable to the wobble box housing 112. As best shown in FIG. 3, one or more bearings may be configured to rotatably support the wobble shaft 110 (e.g., the central body portion 110B of the wobble shaft 110) within the opening 114D of the pivot sleeve 114. In some instances, such bearings may also be configured to limit axial translation of the wobble shaft 110.

Additionally, the pivot sleeve 114 is rotatably coupled to the output shaft 116. More particularly, the output shaft 116 is rotatable about an output axis 116A. The output shaft 116 has a main shaft portion 116B and lobes 116C extending from the main shaft portion 116B. The main shaft portion 116B of the output shaft 116 is configured to be rotatably coupled to the central column 22 (FIGS. 1A and 1B). For instance, the main shaft portion 116B of the output shaft 116 may be fixedly rotatably coupled to the central column 22 (FIGS. 1A and 1B), such that the main shaft portion 116B and the central column 22 rotate together about the output axis 116A as one unit. In such instances, the column rotational axis 22A of the central column 22 (FIGS. 1A and 1B) is coincident with the output axis 116A of the output shaft 116.

The lobes 114C of the pivot sleeve 114 are rotatably coupled to the lobes 116C of the output shaft 116. For instance, an opening 116D is formed in each of the lobes 116C of the output shaft 116, each of the openings 116D of the output shaft 116 being configured to receive one of the lobes 114C of the pivot sleeve 114. As particularly shown in FIG. 4, the lobes 114C of the pivot sleeve 114 may be rotatably supported by bearings received within the openings 116D of the output shaft 116. Such bearings may also limit translation of the pivot sleeve 114 along the sleeve axis 114A. In some instances, the lobes 116C of the output shaft 116 extend from the main shaft portion 116B to a collar 116E around the input shaft 104. The collar 116E may support one or more of the bearings for supporting rotation of the input shaft 104 about the input axis 104A.

In some instances, the input and output axes 104A, 116A of the input and output shafts 104, 116 are substantially parallel and extend substantially vertically. In particularly advantageous instances, the axes 104A, 116A of the input and output shafts 104, 116 are coincident. It should be appreciated that, when the axes 104A, 116A of the input and output shafts 104, 116 are coincident with each other, the installation width of the wobble box 100 is reduced compared to drive mechanisms where the input axis 104A of the input shaft 104 is oriented at an angle (e.g., transverse or orthogonal) to the output axis 116A of the output shaft 116 and/or the column rotational axis 22A of the central column 22.

As particularly shown in FIG. 3, the central body portion 110B of the wobble shaft 110 is not symmetric (is asymmetric) about the intermediate axis 108A. For instance, the central body portion 110B of the wobble shaft 110 extends at an angle relative to the lobes 110C, and thus, the intermediate axis 108A. For example, in one embodiment, the central body portion 110B is cylindrical, where a symmetric, longitudinal body axis 110P of the central body portion 110B extends at a non-zero angle A1 relative to the intermediate axis 108A. As such, rotation of the wobble shaft 110 about the intermediate axis 108A causes the pivot sleeve 114 to pivot back and forth about the sleeve axis 114A of the pivot sleeve 114 and to oscillate back and forth about the output axis 116A of the output shaft 116. For instance, when the pivot sleeve 114 pivots in a first direction about the sleeve axis 114A such that the body axis 110P of the central body portion 110B of the wobble shaft 110 (and of the main body portion 114B of the pivot sleeve 114) slopes downwardly from left to right in FIG. 3, the pivot sleeve 114 (and the output shaft 116) is pivoted in a first direction about the output axis 116A (the first direction about the output axis 116A being the same direction as the wobble box housing 112 about the housing axis 112A). Conversely, when the pivot sleeve 114 pivots in a second, opposite direction about the sleeve axis 114A such that the body axis 110P of the central body portion 110B of the wobble shaft 110 (and of the main body portion 114B of the pivot sleeve 114) slopes upwardly from left to right (not shown), the pivot sleeve 114 (and the output shaft 116) is pivoted in a second, opposite direction about the output axis 116A (the second direction about the output axis 116A being in the opposite direction of the wobble box housing 112 about the housing axis 112A). This oscillation of the output shaft 116 occurs while the second gear 108, the wobble shaft 110, and the wobble box housing 112 are still being rotated about the input axis 104A/the housing axis 112A, such that the output shaft 116 is still moving overall in a given rotational direction (the same rotational direction of the second gear 108, the wobble shaft 110, and the wobble box housing 112 about the input axis 104A/the housing axis 112A). In general, the larger the angle A1 between the central body portion 110B and the intermediate axis 108A, the greater the oscillation of the output shaft 116 about the output axis 116A.

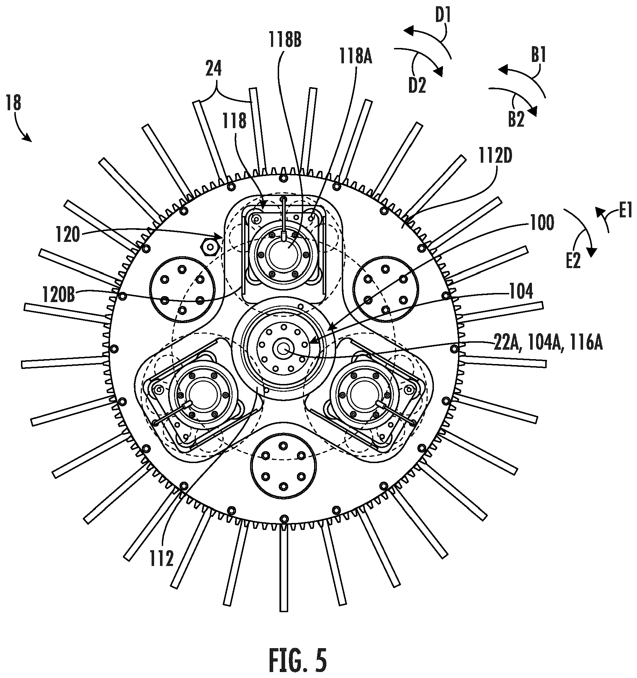

Referring now to FIG. 5, a top-down view of one embodiment of a shaker, such as one of the shakers 18 of the agricultural harvester 10 illustrated in FIGS. 1A and 1B, and the wobble box 100 described above with reference to FIGS. 2-4 are illustrated in accordance with aspects of the present subject matter. In the embodiment shown in FIG. 5, the column rotational axis 22A of the central column 22 (not shown) is coincident with the axes 104A, 116A of the input shaft 104 and the output shaft 116 (not shown). When the input shaft 104 is rotated in a first rotational direction D1, the output shaft 116 (not shown) and central column 22 (not shown) are mainly rotated in a second rotational direction D2, with oscillation movement back and forth. For instance, due to the pivoting of the pivot sleeve 114 from rotation of the wobble shaft 110 described above with reference to FIG. 3, the shaker 18 (e.g., the central column 22 and rods 24) may alternate back and forth between rotating by a first angle B1 in the first rotational direction D1 about the column rotational axis 22A and rotating by a second angle B2 in the second rotational direction D2 about the column rotational axis 22A, while the second gear 108, the wobble shaft 110, and the wobble box housing 112 are rotating about the housing axis 112A in the second direction D2. As a result, the shaker 18 switches back and forth between rotating about the column rotational axis 22A by a first effective angle E1 in the first direction D1 (e.g., as a result of the first angle B1 in the first direction D1 and angular rotation from the second gear 108, the wobble shaft 110, and the wobble box housing 112 rotating about the housing axis 112A in the second direction D2) then a second effective angle E2 in the second direction D2 (e.g., as a result of the second angle B2 in the second direction and angular rotation from the second gear 108, the wobble shaft 110, and the wobble box housing 112 rotating about the housing axis 112A in the second direction D2). The first effective angle E1 is smaller than the second effective angle E2, which provides oscillating motion of the shaker 18 between the first and second directions D1, D2 while the shaker 18 still effectively rotates in the second direction D2. Accordingly, the input shaft 104 may be driven in a constant direction and no special control is needed to allow the oscillating movement of the shaker 18, which makes the shaker 18 simple and reliable.

In some instances, one or more slide assemblies 118 may be provided to help limit the degree of oscillation of the shaker 18. For instance, a slide frame 120 may be rotatably fixedly coupled to the output shaft 116 (not shown) and/or the central column 22 (not shown) such that the slide frame 120 rotates with the output shaft 116 about the output axis 116A. The slide frame 120 may include a plurality of radially extending slots 120B spaced apart about the output axis 116A, where each of the slots 120B is configured to receive a respective one of the slide assemblies 118. More particularly, each slide assembly 118 may include a stop member 118A configured to engage with and slide within the respective slot 120B, where the stop member 118A is held in sliding engagement within the respective slot 120B by a mount 118B, with the mount 118B being fixed relative to the wobble box housing 112 of the wobble box 100. It should be appreciated that the distance that the stop members 118A may slide within the slots 120B corresponds to the angles B1, B2 of oscillation. For instance, when the slide frame 120 begins to rotate in the second direction D2, the stop members 118A begin to slide to the radially outer ends of the slots 120B, furthest from the input axis 104. When the stop members 118A reach the radially outer ends of the slots 120B, the slide frame 120 has rotated by the angle B2 in the second direction D2, and the slide frame 120 is prevented from further rotation in the second direction D2. Similarly, when the slide frame 120 begins rotating in the first direction D1, the stop members 118A begin sliding to the radially inner ends of the slots 120B, closest to the input shaft 104. When the stop members 118A reach the radially inner ends of the slots 120B, the slide frame 120 has rotated by the angle B1 in the first direction D1, and the slide frame 120 is prevented from further rotation in the first direction D1.

## Claims

1. An agricultural harvester (10), comprising:
a frame (M1);
a shaker (18) supported on the frame (M1), the shaker (18) comprising:
a central column (22) rotatable about a column axis (22A) relative to the frame (M1); and
a plurality of flexible rods (24) extending outwardly from the central column (22); and
a wobble box (100), comprising:
a housing (112);
an input shaft (104) rotatable about an input axis (104A) relative to the housing (112);
a wobble shaft (110) rotatably coupled to the input shaft (104), the wobble shaft (110) being rotatable relative to the housing (112) about an intermediate axis (108A), the intermediate axis (108A) being at an angle relative to the input axis (104A), the wobble shaft (110) having a central body portion (110B), the central body portion (110B) being asymmetric about the intermediate axis (108A);
a pivot sleeve (114) configured to rotate about a sleeve axis (114A), the sleeve axis (114A) being at an angle relative to the intermediate axis (108A), the pivot sleeve (114) defining an opening (114D) for receiving the central body portion (110B) of the wobble shaft (110), the pivot sleeve (114) oscillating between rotating in a first direction and a second direction about the sleeve axis (114A) with rotation of the wobble shaft (110) in a first direction about the intermediate axis (108A) ; and
an output shaft (116) coupled to the pivot sleeve (114) and rotatably fixedly coupled to the central column (22), the output shaft (116) being configured to rotate about an output axis (116A), the output axis (116A) being at an angle relative to the sleeve axis (114A) and coincident with the column axis (22A), the output shaft (116) rotating in a first direction about the output axis (116A) when the pivot sleeve (114) rotates in the first direction about the sleeve axis (114A), the output shaft (116) rotating in a second direction about the output axis (116A) when the pivot sleeve (114) rotates in the second direction about the sleeve axis (114A).

2. The agricultural harvester of claim 1, further comprising:
a first gear (106) rotatably fixedly coupled to the input shaft (104) for rotation about the input axis (104A); and
a second gear (108) rotatably fixedly coupled to the wobble shaft (110) for rotation about the intermediate axis (108A), the first gear (106) and the second gear (108) being configured to mesh such that rotation of the first gear (106) causes rotation of the second gear (108).

3. The agricultural harvester of claim 1, wherein the input axis (104A) is orthogonal to the intermediate axis (108A).

4. The agricultural harvester of claim 1, wherein the output axis (116A) is orthogonal to the intermediate axis (108A).

5. The agricultural harvester of claim 1, wherein the output axis (116A) is coincident with the input axis (104A).

6. The agricultural harvester of claim 1, wherein the wobble shaft (110) and the housing (112) rotate together about the input axis (104A).

7. The agricultural harvester of claim 1, wherein the shaker (18) is a first shaker, the agricultural harvester (10) further comprising a second shaker, the first and second shakers being spaced apart such that plants (P1) may be received between the first and second shakers.

8. The agricultural harvester of claim 1, further comprising a motor, the motor being configured for rotationally driving the input shaft (104) in a first direction about the input axis to rotate the wobble shaft (110) in the first direction about the intermediate axis (108A).

9. The agricultural harvester of claim 1, wherein the housing (112) has external toothing (112D).

10. The agricultural harvester of claim 1, wherein the central body portion (110B) is substantially cylindrical, with the central body portion (110B) being symmetric about a body axis (110P), the body axis being at an angle relative to the intermediate axis (108A).

## Patentansprüche

1. Landwirtschaftliche Erntemaschine (10), umfassend:
einen Rahmen (M1);
einen Schüttler (18), getragen auf dem Rahmen (M1), wobei der Schüttler (18) umfasst:
eine Mittelsäule (22), die relativ zu dem Rahmen (M1) um eine Säulenachse (22A) drehbar ist; und
eine Vielzahl von flexiblen Stäben (24), die sich von der Mittelsäule (22) nach außen erstrecken; und
ein Taumelgetriebe (100), umfassend:
ein Gehäuse (112);
eine Eingangswelle (104), die relativ zu dem Gehäuse (112) um eine Eingangsachse (104A) drehbar ist;
eine Taumelwelle (110), die drehbar mit der Eingangswelle (104) gekoppelt ist, wobei die Taumelwelle (110) relativ zu dem Gehäuse (112) um eine Zwischenachse (108A) drehbar ist, wobei die Zwischenachse (108A) in einem Winkel relativ zu der Eingangsachse (104A) steht, wobei die Taumelwelle (110) einen zentralen Körperabschnitt (110B) aufweist, wobei der zentrale Körperabschnitt (110B) asymmetrisch um die Zwischenachse (108A) ist;
eine Schwenkhülse (114), die dazu konfiguriert ist, sich um eine Hülsenachse (114A) zu drehen, wobei die Hülsenachse (114A) in einem Winkel relativ zu der Zwischenachse (108A) angeordnet ist, wobei die Schwenkhülse (114) eine Öffnung (114D) zum Aufnehmen des zentralen Körperabschnitts (110B) der Taumelwelle (110) definiert, wobei die Schwenkhülse (114) mit der Drehung der Taumelwelle (110) in einer ersten Richtung um die Zwischenachse (108A) zwischen einer Drehung in einer ersten Richtung und einer zweiten Richtung um die Hülsenachse (114A) oszilliert; und
eine Abtriebswelle (116), die mit Schwenkhülse (114) gekoppelt ist und drehfest mit der Mittelsäule (22) gekoppelt ist, wobei die Abtriebswelle (116) konfiguriert ist, um sich um eine Abtriebsachse (116A) zu drehen, wobei die Abtriebsachse (116A) in einem Winkel relativ zu der Hülsenachse (114A) steht und mit der Säulenachse (22A) zusammenfällt, wobei sich die Abtriebswelle (116) in einer ersten Richtung um die Abtriebsachse (116A) dreht, wenn sich die Schwenkhülse (114) in der ersten Richtung um die Hülsenachse (114A) dreht, wobei sich die Abtriebswelle (116) in einer zweiten Richtung um die Abtriebsachse (116A) dreht, wenn sich die Schwenkhülse (114) in der zweiten Richtung um die Hülsenachse (114A) dreht.

2. Landwirtschaftliche Erntemaschine nach Anspruch 1, ferner umfassend:
ein erstes Zahnrad (106), das zur Drehung um die Eingangsachse (104A) drehfest mit der Eingangswelle (104) gekoppelt ist; und
ein zweites Zahnrad (108), das zur Drehung um die Zwischenachse (108A) drehfest mit der Taumelwelle (110) gekoppelt ist, wobei das erste Zahnrad (106) und das zweite Zahnrad (108) konfiguriert sind, um derart ineinanderzugreifen, dass eine Drehung des ersten Zahnrads (106) eine Drehung des zweiten Zahnrads (108) bewirkt.

3. Landwirtschaftliche Erntemaschine nach Anspruch 1, wobei die Eingangsachse (104A) orthogonal zu der Zwischenachse (108A) ist.

4. Landwirtschaftliche Erntemaschine nach Anspruch 1, wobei die Ausgangsachse (116A) orthogonal zu der Zwischenachse (108A) ist.

5. Landwirtschaftliche Erntemaschine nach Anspruch 1, wobei die Ausgangsachse (116A) mit der Eingangsachse (104A) zusammenfällt.

6. Landwirtschaftliche Erntemaschine nach Anspruch 1, wobei sich die Taumelwelle (110) und das Gehäuse (112) gemeinsam um die Eingangsachse (104A) drehen.

7. Landwirtschaftliche Erntemaschine nach Anspruch 1, wobei der Schüttler (18) ein erster Schüttler ist, wobei die landwirtschaftliche Erntemaschine (10) ferner einen zweiten Schüttler umfasst, wobei der erste und der zweite Schüttler so beabstandet sind, dass Pflanzen (P1) zwischen dem ersten und dem zweiten Schüttler aufgenommen werden können.

8. Landwirtschaftliche Erntemaschine nach Anspruch 1, ferner umfassend einen Motor, wobei der Motor dafür konfiguriert ist, die Eingangswelle (104) in einer ersten Richtung um die Eingangsachse drehend anzutreiben, um die Taumelwelle (110) in der ersten Richtung um die Zwischenachse (108A) zu drehen.

9. Landwirtschaftliche Erntemaschine nach Anspruch 1, wobei das Gehäuse (112) eine äußere Verzahnung (112D) aufweist.

10. Landwirtschaftliche Erntemaschine nach Anspruch 1, wobei der zentrale Körperabschnitt (110B) im Wesentlichen zylindrisch ist, wobei der zentrale Körperabschnitt (110B) um eine Körperachse (110P) symmetrisch ist, wobei die Körperachse in einem Winkel relativ zu der Zwischenachse (108A) verläuft.

## Revendications

1. Récolteuse agricole (10), comprenant :
un châssis (M1) ;
un secoueur (18) supporté sur le châssis (M1), le secoueur (18) comprenant :
une colonne centrale (22) pouvant tourner autour d'un axe de colonne (22A) par rapport au châssis (M1) ; et
une pluralité de tiges flexibles (24) s'étendant vers l'extérieur à partir de la colonne centrale (22) ; et
une boîte oscillante (100), comprenant :
un boîtier (112) ;
un arbre d'entrée (104) pouvant tourner autour d'un axe d'entrée (104A) par rapport au boîtier (112) ;
un arbre oscillant (110) couplé en rotation à l'arbre d'entrée (104),
l'arbre oscillant (110) pouvant tourner par rapport au boîtier (112) autour d'un axe intermédiaire (108A), l'axe intermédiaire (108A) formant un angle par rapport à l'axe d'entrée (104A), l'arbre oscillant (110) ayant une partie de corps centrale (110B), la partie de corps centrale (110B) étant asymétrique autour de l'axe intermédiaire (108A) ;
un manchon de pivot (114) conçu pour tourner autour d'un axe de manchon (114A), l'axe de manchon (114A) formant un angle par rapport à l'axe intermédiaire (108A), le manchon de pivot (114) définissant une ouverture (114D) destinée à recevoir la partie de corps centrale (110B) de l'arbre oscillant (110), le manchon de pivot (114) oscillant entre une rotation dans un premier sens et un second sens autour de l'axe de manchon (114 A) avec la rotation de l'arbre oscillant (110) dans un premier sens autour de l'axe intermédiaire (108A) ; et
un arbre de sortie (116) accouplé au manchon de pivot (114) et accouplé de manière fixe en rotation à la colonne centrale (22), l'arbre de sortie (116) étant conçu pour tourner autour d'un axe de sortie (116A), l'axe de sortie (116A) formant un angle par rapport à l'axe de manchon (114A) et coïncidant avec l'axe de colonne (22A), l'arbre de sortie (116) tournant dans un premier sens autour de l'axe de sortie (116A) lorsque le manchon de pivot (114) tourne dans le premier sens autour de l'axe de manchon (114A), l'arbre de sortie (116) tournant dans un second sens autour de l'axe de sortie (116A) lorsque le manchon de pivot (114) tourne dans le second sens autour de l'axe de manchon (114A).

2. Récolteuse agricole selon la revendication 1, comprenant en outre :
un premier engrenage (106) accouplé de manière fixe en rotation à l'arbre d'entrée (104) pour une rotation autour de l'axe d'entrée (104A) ; et
un second engrenage (108) accouplé de manière fixe en rotation à l'arbre oscillant (110) pour une rotation autour de l'axe intermédiaire (108A), le premier engrenage (106) et le second engrenage (108) étant conçus pour s'engrener de telle sorte que la rotation du premier engrenage (106) provoque la rotation du second engrenage (108).

3. Récolteuse agricole selon la revendication 1, dans laquelle l'axe d'entrée (104A) est orthogonal à l'axe intermédiaire (108A).

4. Récolteuse agricole selon la revendication 1, dans laquelle l'axe de sortie (116A) est orthogonal à l'axe intermédiaire (108A).

5. Récolteuse agricole selon la revendication 1, dans laquelle l'axe de sortie (116A) coïncide avec l'axe d'entrée (104A).

6. Récolteuse agricole selon la revendication 1, dans laquelle l'arbre oscillant (110) et le boîtier (112) tournent ensemble autour de l'axe d'entrée (104A).

7. Récolteuse agricole selon la revendication 1, dans laquelle le secoueur (18) est un premier secoueur, la récolteuse agricole (10) comprenant en outre un second secoueur, les premier et second secoueurs étant espacés de telle sorte que des plantes (P1) puissent être reçues entre les premier et second secoueurs.

8. Récolteuse agricole selon la revendication 1, comprenant en outre un moteur, le moteur étant conçu pour entraîner en rotation l'arbre d'entrée (104) dans un premier sens autour de l'axe d'entrée pour faire tourner l'arbre oscillant (110) dans le premier sens autour de l'axe intermédiaire (108A).

9. Récolteuse agricole selon la revendication 1, dans laquelle le boîtier (112) présente une denture externe (112D).

10. Récolteuse agricole selon la revendication 1, dans laquelle la partie de corps centrale (110B) est sensiblement cylindrique, la partie de corps centrale (110B) étant symétrique autour d'un axe de corps (110P), l'axe de corps formant un angle par rapport à l'axe intermédiaire (108A).
